# EUROPEAN PATENT APPLICATION

(11) **EP 1 788 560 A1**
(43) Date of publication of application: **23.05.2007**
(21) Application number: 05110726.6
(22) Date of filing: 14.11.2005
(51) Int. Cl.: G11B 7/00, G11B 7/242

(54) **Dual-layer recordable optical disc and manufacturing method thereof**

(71) Applicant: Ritek Corporation, X (TW)
(72) Inventor: Yeh, Ru-Lin, Hsinchu Hsien (TW); Chen, Chung-Fa, 247, Lujhou City (TW); Lin, Chun-Ying, 350, Jhunan Township (TW); Wang, Wei-Hsiang, Hisnchu (TW)
(74) Representative: Reichert, Werner Franz

(57) **Abstract**

A dual-layer recordable optical disc includes a first recording layer and a second recording layer disposed on the first recording layer. The first recording layer is made of organic material, and the second recording layer is made of inorganic material. The optical disc may further includes a first substrate, a second substrate and a bonding layer. The first recording layer includes a dye recording layer disposed on the first substrate, and a first reflection layer disposed on the dye recording layer, whereas the second recording layer includes an inorganic recording layer and a second reflection layer disposed on the inorganic recording layer. In addition, the second substrate is disposed on the second reflection layer, and the bonding layer is disposed between the first reflection layer and the inorganic recording layer. A manufacturing process of the optical disc is also provided to increase production yield and lower manufacturing cost.

## Description

The present invention relates to an optical storage medium and manufacturing method thereof, and more particularly to a dual-layer recordable optical disc and manufacturing method thereof.

### Description of the Related Art

Compared with traditional magnetic storage medium, optical discs are larger in capacity and lower in cost, and are more secure to prevent data loss, and thus have longer lifetime and are easier for maintenance. As manufacturing processes and multimedia video-audio data compressing technologies become relatively mature, optical storage medium will be even larger in capacity and smaller in size. Hence, dual-layer optical discs with larger capacity are becoming more popular in the market.

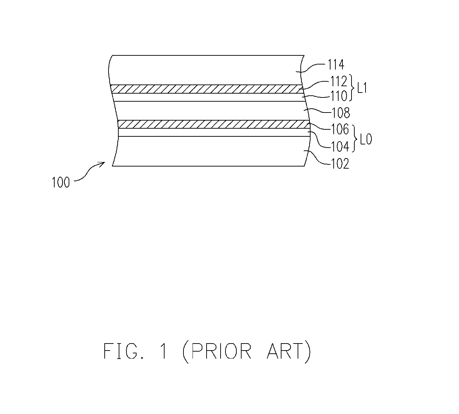

Nowadays, the recording materials used for dual-layer recordable optical discs are organic dye. Structures of such discs are illustrated in FIG. 1, a sectional view of a conventional dual-layer recordable optical disc, and are further described below. As shown in FIG. 1, the dual-layer disc 100 includes a first substrate 102, a first dye recording layer 104, a first reflection layer 106, a bonding layer 108, a second dye recording layer 110, a second reflection layer 112, and a second substrate 113. Wherein, the first dye recording layer 104 is disposed on the first substrate 102, the first reflection layer 106 is disposed on the first dye recording layer 104, the bonding layer 108 is disposed on the first reflection layer 106, the second dye recording layer 110 is disposed on the bonding layer 108, the second reflection layer 112 is disposed on the second dye recording layer 110, and the second substrate 114 is disposed on the second reflection layer 112.

It is worthy of notice that, in the dual-layer recordable optical disc 100, the first dye recording layer 104 and the first reflection layer 106 are jointly called as the first recording layer (L0), whereas the second dye recording layer 110 and the second reflection layer 112 are jointly called as the second recording layer (L1). There are two methods for manufacturing the foregoing dual-layer recordable optical disc, as described below.

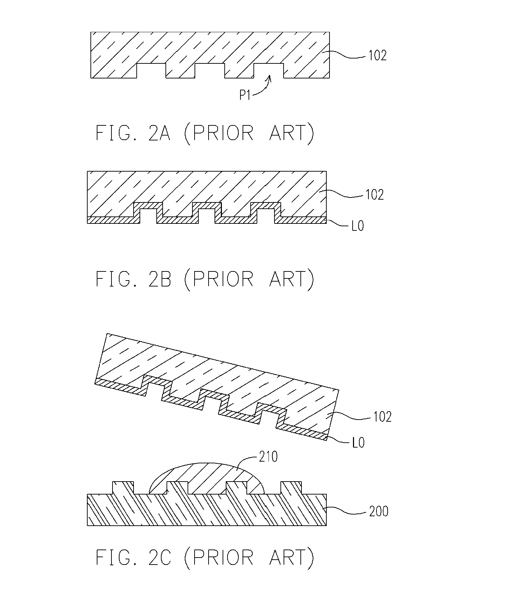

FIGS. 2A to 2G illustrate a process of manufacturing conventional dual-layer recordable optical discs. As shown in FIG. 2A, the first substrate 102 is provided with a spiral trench P1 formed therein. Next, as shown in FIG. 2B, the first recording layer L0 is disposed on the first substrate 102.

Referring to FIG. 2C, a stamper 200 is provided with a spiral trench therein. Next, a polymer resin 210 is placed on the stamper 200 to facilitate bonding between the stamper 200 and the first substrate 102.

Referring to FIG. 2D, the stamper 200 with the polymer resin 210 is then pressed to the first substrate 102, and the polymer resin 210 is solidified under a beam of light. Here, pattern of the spiral trench of the stamper is then transferred onto the surface of the polymer resin 210 forming a second spiral trench P2.

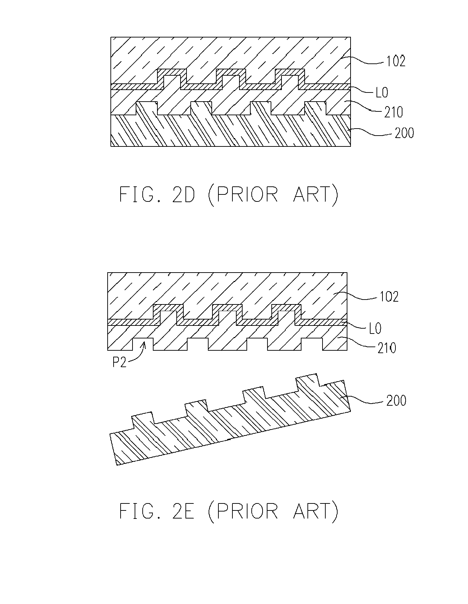

Referring to FIG. 2E, after solidification of the polymer resin 210, the stamper 200 is lifted off from the polymer resin 210. It is worthy of notice that, since the performance of this step directly affects the quality of the second trench P2, a polymer resin with good lifting-off properties must be used for the stamper 200 being smoothly lifted off from the polymer resin 210. Thus, there a limitation in selection of materials used for the polymer resin 210.

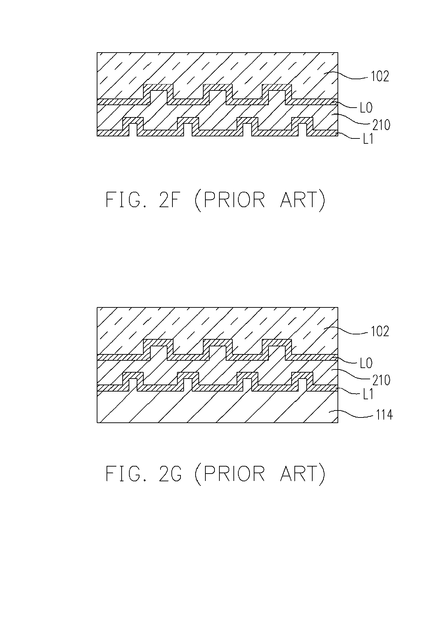

Referring to FIGs. 2F and 2G after the formation of the second spiral trench P2, the second recording layer L1 is formed on the surface of the polymer resin 210. Next, the second substrate 114 is pressed to form on the second recording layer L1 to finish the process of forming the dual-layer recordable optical disc. The foregoing method is difficult to be carried out in the step of lifting off the stamper (200) from the polymer resin (210); which causes certain problems, such as, lower production yield due to poor duplicatability of the trench caused by chipped edges. In addition, some polymer resin may stick on the surface of the stamper during the process, which significantly shortens the lifetime of the stamper such that in certain cases the stamper can be used only once. This problem will cause consumption of the stamper to be increased, which is one of the major causes the raise of the production cost.

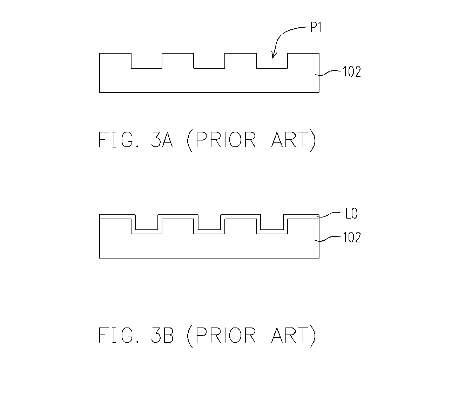

In order to avoid the problems in the lifting off step and hence increase the production yield, another manufacturing method is developed. FIGs. 3A to 3D illustrate another process of manufacturing conventional dual-layer recordable optical discs. As shown in FIGs. 3A and 3B, the critical point is that trench of the second recording layer (L1 in FIG. 3A) is formed on another substrate, rather than that, as described in the first manufacturing method (shown in FIGs. 2C to 2E), the trenches of the first recording layer L0 and the second recording layer L1 are formed sequentially on the same substrate. Thus, a substrate 102 is first provided with spiral trench P1 formed therein. Next, a first recording layer L0 is formed on the first substrate 102, as shown in FIG. 3B.

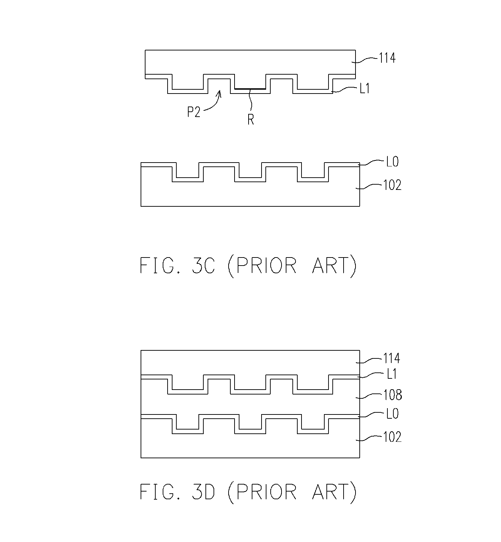

Referring to FIG. 3C, the second substrate 114 is provided with the second recording layer L1 formed thereon. It is known from FIG. 1 that the second recording layer L1 includes the second dye recording layer 110 and the second reflection layer 112, and that the spiral trench used for the second recording layer L1 has already formed on the second substrate 114.

Referring lastly to FIG. 3D, a bonding layer 108 between the first substrate 102 and the second substrate 114 to bind the first recording layer L0 and the second recording layer L1. Hence, the process of forming the dual-layer recordable optical disc is completed. On the second dye recording layer 110, however, the amount of dye will be insufficiently coated in the flat-top region R (i.e., the region protruding region besides the trench P2), whereas the flat-top region R is the region for recording; which will adversely affect the quality of recording. After completing the formation of the conventional second recording layer L1, a rather thick protective layer (not shown) is often formed on the second dye recording layer 110 for prevent chemical reactions from occurring between the second dye recording layer 110 and the bonding layer 108. The thick protective layer needs additional process, such as sputtering deposition process with a special material, and therefore causes more difficulty in fabrication. The formation of such protective layer is an extra step and thus is not desirable for controlling the production cost.

In the aforementioned two processed of manufacturing dual-layer recordable optical discs, the first type of process (FIGs. 2A to 2G) is lower in production yield and is not suitable for mass production. Whereas, the second type of process (FIGs. 3A to 3D) is higher in production yield, but is relatively lower in efficiency. In other words, currently there is no any process of manufacturing dual-layer recordable optical discs that is desirable both in production yield and in efficiency.

In view of the above, the present invention is directed to provide a structure of a dual-layer recordable optical disc, recording material of which is an inorganic recording layer or a dye recording layer.

The present invention is also directed to provide a process of manufacturing a dual-layer recordable optical disc so as to significantly increase the production yield and efficiency as well.

The present invention provides a structure of an optical disc, which includes a first recording layer and a second recording layer. Wherein, the second recording layer is disposed on the first recording layer, whereas the first recording layer is made of organic material, and the second recording layer is made of inorganic material.

According to a preferred embodiment of this invention, the optical disc further includes a first substrate, a second substrate, and a bonding layer, wherein the first recording layer includes a dye recording layer disposed on the first substrate and a first reflection layer disposed on the dye recording layer, and the second recording layer includes a lower dielectric layer, an inorganic recording layer, an upper dielectric layer and a second reflection layer, as a stacked layer of inorganic materials, disposed on the inorganic recording layer. In addition, the second substrate is disposed on the second reflection layer, and the bonding layer is disposed between the first reflection layer and the inorganic recording layer.

According to a preferred embodiment of this invention, the first substrate is made of, polycarbonate, polymethylmethacrylate, armophous polyolefin, or other transparent materials. In addition, the first substrate has a first spiral trench formed thereon. The dye recording layer is made of, for example, cyanine dye, azo, oxonal, squarylium compound, formazan, or a mixture of these compounds.

According to a preferred embodiment of this invention, the first reflection layer is made of reflective materials, such as silver, aluminum, silver alloy or aluminum alloy, and has a thickness of, for example, between 5 nm to 30 nm.

According to a preferred embodiment of this invention, the inorganic recording layer is made of, for example, aluminum-silicon alloy or as an aluminum-silicon composite layer. Wherein, the aluminum-silicon alloy contains 10-80wt% of aluminum and 20-90wt% of silicon, whereas the thickness of the aluminum-silicon alloy is of between 5 nm to 80 nm.

According to a preferred embodiment of this invention, the second reflection layer is made of reflective materials, such as silver, aluminum, silver alloy or aluminum alloy, and has a thickness of between 30 nm to 300 nm, for example.

According to a preferred embodiment of this invention, the second substrate is made of, for example, polycarbonate, polymethylmethacralate, armophous polyolefin, or other transparent materials. In addition, the second substrate has a second spiral trench formed thereon.

According to a preferred embodiment of this invention, a first dielectric layer is further disposed between the inorganic recording layer and the second reflection layer. The first dielectric layer is made of, for example, zinc sulfide-silicon dioxide (ZnS-SiO₂), silicon oxide (SiOₓ) or silicon nitride (SiN). The oxide can even be oxides of Y, Ce, Ti, Zr, Nb, Ta, Co, Zn, Al, Si, Ge, Sn, Pb, Sb, Bi, Te, or other, and the nitride can be nitrides of Ti, Zr, Nb, Ta, Cr, Mo, W, B, Al, Ga, In, Si, Ge, Sn, Pb, or other. Where ZnS-SiO₂ is used, the first dielectric layer 411 contains 20wt% of ZnS and 80wt% of SiO₂, and has a thickness of between 5 nm to 150 nm. In addition, a second dielectric layer can be disposed between the inorganic recording layer and the bonding layer, wherein the second dielectric layer is made of, for example, zinc sulfide-silicon dioxide (ZnS-SiO₂), silicon oxide (SiOₓ) or silicon nitride (SiN), and has a thickness of between 1 nm to 200 nm.

The present invention further provides a process of manufacturing an optical disc. First, a first substrate is provided with a first spiral trench formed thereon, and a dye recording layer and a first reflection layer are then sequentially formed on the first substrate. Next, a second substrate is provided with a second trench formed thereon, and a second reflection layer and an inorganic recording layer are then sequentially formed on the second substrate. Further, the first substrate with the dye recording layer and the first reflection layer formed thereon is bonded with the second substrate with the second reflection layer and the inorganic recording layer formed thereon. After formation of the second reflection layer and before formation of the inorganic recording layer, as mentioned above, a first dielectric layer can be further disposed on the second reflection layer.

According to a preferred embodiment of the manufacturing process of the present invention, the foregoing binding step is carried out by, for example, providing a bonding layer on the first reflection layer or the inorganic recording layer, and bonding the first substrate, which has the dye recording layer and the first reflection layer formed thereon, with the second substrate, which has the second reflection layer and the inorganic recording layer formed thereon. The dye recording layer is formed via, for example, a coating process, whereas the first reflection layer, the second reflection layer and the inorganic recording layer are formed via, for example, a sputtering process. It is worthy of notice that use of the sputtering process can ensure the inorganic recording layer being thick enough in the R region as shown in FIG. 3C and adhering nicely on the second recording layer L1.

The present invention adopts a novel structure and uses new inorganic materials for making a recording layer in the structure, so that the first recording layer L0 and the second recording layer L1 can be formed separately on different substrates, which avoids a lift-off step and thus increases the production yield and lowers the cost. Besides, a sputtering process is used for disposing the inorganic recording layer as the recording layer of the second recording layer L1, which ensures the quality of recording operations of the second recording layer L1.

It is to be understood that both the foregoing general description and the following detailed description are exemplary, and are intended to provide further explanation of the invention as claimed.

FIG. 1 is a sectional view showing a conventional dual-layer optical disc.

FIGs. 2A to 2G are sectional views showing a process of manufacturing the conventional dual-layer optical disc.

FIGs. 3A to 3D are sectional views showing another process of manufacturing the conventional dual-layer optical disc.

FIG. 4A is a sectional view showing a dual-layer optical disc according to one preferred embodiment of the present invention.

FIG. 4B is a sectional view showing a dual-layer optical disc according to another preferred embodiment of the present invention.

FIGs. 5A to 5E are sectional views showing a process of manufacturing a dual-layer optical disc according to one preferred embodiment of the present invention.

FIG. 6 is a sectional view showing a dual-layer optical disc according to another preferred embodiment of the present invention.

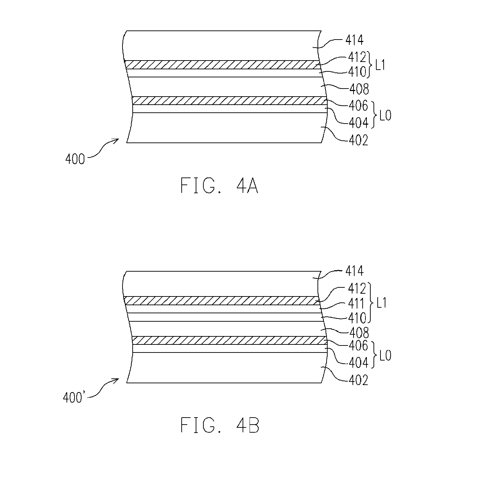

FIG. 4 shows a dual-layer recordable optical disc according to a preferred embodiment of the present invention. As shown in FIG. 4, the dual-layer recordable optical disc 400 includes a first substrate 402, a dye recording layer 404, a first reflection layer 406, a bonding layer 408, an inorganic recording layer 410, a second reflection layer 412, and a second substrate 414. Wherein, the dye recording layer 404 is disposed on the first substrate 402, the first reflection layer 406 is disposed on the dye recording layer 404, the bonding layer 408 is disposed on the first reflection layer 406, the inorganic recording layer 410 is disposed on the bonding layer 408, the second reflection layer 412 is disposed on the inorganic recording layer 410, and the second substrate 414 is disposed on the second reflection layer 412.

It is worthy of notice that, in this embodiment, the dye recording layer 404 and the inorganic recording layer 410 are both manufactured in the same dual-layer optical disc 400. In addition, the dye recording layer 404 and the first reflection layer 406, as combined, are called as the first recording layer L0, whereas the inorganic recording layer 410 and the second reflection layer 412, as combined, are called as the second recording layer L1.

FIG. 4B shows a dual-layer optical disc according to another preferred embodiment of the present invention. The dual-layer optical disc 400' of this embodiment is similar structurally to the dual-layer optical disc 400 (shown in FIG. 4A); the former differs only in that a first dielectric layer 411 is further disposed between the inorganic recording layer 410 and the second reflection layer 412.

In this embodiment, the first dielectric layer 411 is made of, for example, zinc sulfide-silicon dioxide (ZnS-SiO₂), silicon oxide (SiOₓ) or silicon nitride (SiN). Where ZnS-SiO₂ is used, the first dielectric layer 411 contains 20wt% of ZnS and 80wt% of SiO₂, and has a thickness of between 5 nm to 150 nm. In addition, a second dielectric layer (not shown) is optionally disposed between the inorganic recording layer 410 and the bonding layer 408, wherein the second dielectric layer is made of, for example, zinc sulfide-silicon dioxide (ZnS-SiO₂), silicon oxide (SiOₓ) or silicon nitride (SiN), and has a thickness of between 1 nm to 200 nm.

The characteristics such as composition and thickness of each layer of the dual-layer optical discs 400 (400') will be further described as the manufacturing process of the discs is discussed below.

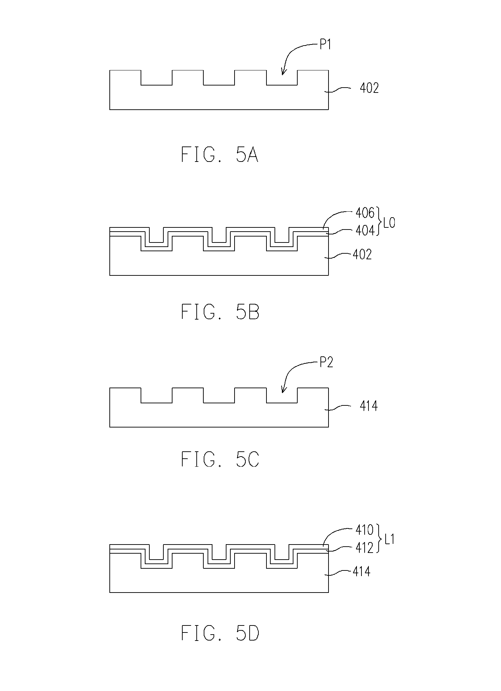

FIGs. 5A to 5E show a process of manufacturing the dual-layer optical disc according to a preferred embodiment of the present invention. As shown in FIG 5A, a first substrate 402 is provided, which is made of, for example, polycarbonate, polymethylmethacrylate, armophous polyolefin, or other transparent materials. It is worthy of notice that the first substrate 402 has a first spiral trench P1 formed thereon.

Next as shown in FIG. 5B, a dye recording layer 404 is formed on the first substrate 402. The dye recording layer 404 is made of, for example, cyanine dye, azo, oxonal, squarylium compound, formazan, or a mixture of these compounds. The dye recording layer 404 is formed on the first substrate 402 via, for example, a coating process.

Referring further to FIG. 5B, after the formation of the dye recording layer 404, a first reflection layer 406 is formed on the dye recording layer 406. In this embodiment, the first reflection layer 406 is made of reflective materials, such as silver, aluminum, silver alloy or aluminum alloy, and has a thickness of, for example, between 5 nm to 30 nm. In addition, the first reflection layer 406 is formed on the dye recording layer 404 via a sputtering process, for example. Note that the dye recording layer 404 and the first reflection layer 406 are jointly called as the first recording layer L0.

Referring to FIG. 5C, a second substrate 414 is further provided, which is made of, for example, polycarbonate, polymethylmethacralate, armophous polyolefin, or other transparent materials. It is noted that the second substrate 414 has a second spiral trench P2 formed thereon.

Referring to FIG. 5D, a second reflection layer 412 is formed on the second substrate 414. In this embodiment, the second reflection layer 412 is made of reflective materials, such as silver, aluminum, silver alloy or aluminum alloy, and has a thickness of between 30 nm to 300 nm, for example. In addition, the second reflection layer 412 is formed on the second substrate 414 via a sputtering process, for example.

Referring still to FIG. 5D, after the formation of the second reflection layer 412, an inorganic recording layer 410 is formed on the second reflection layer 412. In this embodiment, the inorganic recording layer 410 is made of, for example, aluminum-silicon alloy or as an aluminum-silicon composite layer. Where aluminum-silicon alloy is used, for example, aluminum is of 10-80wt% and silicon is of 20-90wt%, whereas the thickness of the aluminum-silicon alloy is of between 5 nm to 80 nm. In addition, the inorganic recording layer 410 is formed on the second reflection layer 412 via a sputtering process, for example. Please note that the second reflection layer 412 and the inorganic recording layer 410 are jointly called as the second recording layer L1.

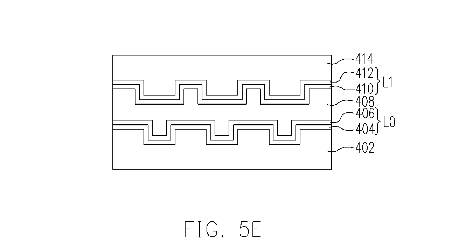

Referring to FIG. 5E, a bonding layer 408 is disposed between the first substrate 402 and the second substrate 414 to bind the first recording layer L0 and the second recording layer L1. It should be noted that, since the inorganic recording layer 410 is not easily contaminated by the boning layer 408, there is no need to form a protecting layer between the inorganic recording layer 410 and the bonding layer 408, which avoids one extra step in the manufacturing process and thus can reduce production cost.

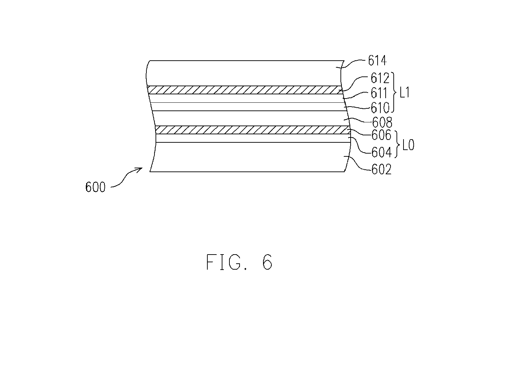

FIG. 6 is a sectional view showing a dual-layer optical disc according to yet another preferred embodiment of the present invention. As shown in FIG. 6, the dual-layer optical disc 600 includes a first substrate 602, a dye recording layer 604, a first reflection layer 606, a bonding layer 608, an inorganic recording layer 610, a second reflection layer 612, and a second substrate 614. Wherein, the dye recording layer 604 is disposed on the first substrate 602. The dye recording layer 604 is made of, for example, cyanine dye, azo, oxonal, squarylium compound, formazan, or a mixture thereof, and has a thickness of 25 nm, for example. The first reflection layer 606 is disposed on the dye recording layer 604, made of silver, and of 20 nm in thickness, for example. The bonding layer 608 is disposed on the first reflection layer 606. The inorganic recording layer 610 is disposed on the bonding layer 608, made of aluminum-silicon alloy, and of 20 nm in thickness, for example. The first dielectric layer 611 is disposed on the inorganic recording layer 610, made of zinc sulfide-silicon dioxide, and of 40 nm in thickness, for example. The second reflection layer 612 is disposed on the first dielectric layer 611, made of silver, and of 80 nm, for example. The second substrate 614 is disposed on the second reflection layer 612.

Test of electronic signals on the foregoing dual-layer optical discs is described in the following. Resulting data of the test is shown in Table 1 below.

**Table 1:**

| | Power (mW) | R14H (%) | I14/I14H | Asym | PI |
|---|---|---|---|---|---|
| L0 | 24 | 16.6 | 0.716 | 0.002 | 77 |
| L1 | 24 | 17.5 | 0.594 | 0.04 | 128 |

As shown in Table 1, values of the recording power (power) are all within the normal range of commercial DVDs. The post-recording reflectivity (R14H) is also in compliance with the standard minimum value of 16%. Hence, after a recording process, the disc is placed in a testing apparatus to find out the error ratio so as to effectively cancel the error and hence can be played appropriately.

Based on the foregoing, the dual-layer recordable optical disc and manufacturing process thereof have at least the advantages of increasing production yield, lowering manufacturing cost, and ensuring product quality.

It will be apparent to those skilled in the art that various modifications and variations can be made to the embodiments of the present invention without departing from the scope or spirit of the invention. In view of the foregoing, it is intended that the present invention covers modifications and variations of this invention provided they fall within the scope of the following claims and their equivalents.

## Claims

1. A dual-layer recordable optical disc, comprising a first recording layer and a second recording layer, wherein the second recording layer is disposed on the first recording layer, recording material of the first recording layer is organic material, and recording material of the second recording layer is inorganic material.

2. The optical disc according to claim 1, further comprising a first substrate, a second substrate, and a bonding layer, wherein:
the first recording layer comprises a dye recording layer disposed on the first substrate and a first reflection layer disposed on the dye recording layer, the second recording layer comprises an inorganic recording layer and a second reflection layer disposed on the inorganic recording layer, and the second substrate is disposed on the second reflection layer and the bonding layer is disposed between the first reflection layer and the inorganic recording layer.

3. The optical disc according to claim 2, wherein the first substrate has a first spiral trench formed thereon, and the first substrate and the first spiral trench are covered by the dye recording layer.

4. The optical disc according to claim 2, wherein the first substrate is made of polycarbonate, polymethylmethacrylate, armophous, or polyolefine.

5. The optical disc according to claim 2, wherein the dye recording layer is made of cyanine dye, azo, oxonal, squarylium compound, or a mixture thereof.

6. The optical disc according to claim 2, wherein the first reflection layer is made of silver, aluminum, silver-aluminum alloy, or aluminum alloy.

7. The optical disc according to claim 2, wherein the first reflection layer has a thickness of between 5 to 30 nm.

8. The optical disc according to claim 2, wherein the inorganic recording layer is made of aluminum-silicon alloy or as an aluminum-silicon composite layer.

9. The optical disc according to claim 8, wherein the aluminum-silicon alloy contains aluminum in 10-80wt%, and the silicon in 20-90wt%.

10. The optical disc according to claim 8, wherein the aluminum-silicon alloy has a thickness of between 5 to 80 nm.

11. The optical disc according to claim 2, wherein the second reflection layer is made of silver, aluminum, silver alloy, or aluminum alloy.

12. The optical disc according to claim 2, wherein the second reflection layer has a thickness of between 30 to 200 nm.

13. The optical disc according to claim 2, wherein the second substrate has a second spiral trench formed thereon, and the second substrate and the second spiral trench are covered by the inorganic recording layer.

14. The optical disc according to claim 2, wherein the second substrate is made of polycarbonate, polymethylmethacrylate, or armophous.

15. The optical disc according to claim 2, further comprising a first dielectric layer disposed between the inorganic recording layer and the second reflection layer.

16. The optical disc according to claim 15, wherein the first dielectric layer is made of zinc sulfide-silicon dioxide (ZnS-SiO₂), silicon oxide (SiOₓ), or silicon nitride (SiN).

17. The optical disc according to claim 16, wherein said zinc sulfide-silicon dioxide (ZnS-SiO₂) contains zinc sulfide in about 80wt% and silicon oxide (SiO₂) in about 20wt%.

18. The optical disc according to claim 15, wherein the first dielectric layer has a thickness of between 5 to 150 nm.

19. The optical disc according to claim 2, further comprising a second dielectric layer disposed between the inorganic recording layer and the bonding layer.

20. The optical disc according to claim 19, wherein the second dielectric layer has a thickness of between 1 to 200 nm.

21. A method of manufacturing an optical disc, comprising:
providing a first substrate having a first spiral trench formed thereon;
forming sequentially a dye recording layer and a first reflection layer on the first substrate;
providing a second substrate having a second spiral trench formed thereon;
forming sequentially a second reflection layer and an inorganic recording layer on the second substrate; and
bonding the first substrate that has the dye recording layer and the first reflection layer formed thereon with the second substrate that has the second reflection layer and the inorganic recording layer formed thereon.

22. The method according to claim 21, further comprising a step of providing bonding layer disposed on the first reflection layer or the inorganic recording layer, so as to bond the first substrate with the second substrate.

23. The method according to claim 21, wherein the dye recording layer is formed via a coating process.

24. The method according to claim 21, wherein the first reflection layer is formed via a sputtering process.

25. The method according to claim 21, wherein the second reflection layer is formed via a sputtering process.

26. The method according to claim 21, wherein the inorganic recording layer is formed via a sputtering process.

27. The method according to claim 21, further comprising a step of forming a first dielectric layer on the second reflection layer, after formation of the second reflection layer but before formation of the inorganic layer.

28. The method according to claim 21, further comprising a step of forming a second dielectric layer on the inorganic recording layer.

29. The method according to claim 28, wherein the second dielectric layer is formed by a sputtering process.
